(19) Europäisches Patentamt

European Patent Office

Office européen des brevets

(11) Veröffentlichungsnummer: **0 361 247**
**A2**

(12) **EUROPÄISCHE PATENTANMELDUNG**

(21) Anmeldenummer: 89117177.9

(22) Anmeldetag: 16.09.89

(51) Int. Cl.⁵: **C08J 3/00 , B29B 7/00**

(30) Priorität: 30.09.88 DE 3833219

(43) Veröffentlichungstag der Anmeldung:
**04.04.90 Patentblatt 90/14**

(84) Benannte Vertragsstaaten:
**DE FR GB IT**

(71) Anmelder: **BAYER AG**

**D-5090 Leverkusen 1 Bayerwerk(DE)**

(72) Erfinder: **Meier, Erich, Dr.**
**Berta-von-Suttner-Strasse 19**
**D-5090 Leverkusen(DE)**
Erfinder: **Paul, Hanns-Ingolf, Dr.**
**Hahnenweg 3**
**D-5000 Köln 80(DE)**
Erfinder: **Plaetschke, Rüdiger, Dr.**
**Am Thelenhof 18**
**D-5090 Leverkusen(DE)**
Erfinder: **Weymans, Günther, Dr.**
**Karl-Arnold-Strasse 4**
**D-5090 Leverkusen(DE)**

(54) Verfahren zur Herstellung feindisperser Polymermischungen.

㉗ Hochdisperse Mischungen von mindestens zwei unter üblichen Bedingungen in der Schmelze nicht vollständig mischbaren Polymeren werden hergestellt, indem man die eingesetzten Polymeren in Gegenwart von überkritischen Gasen oder Gasgemischen aufschmilzt, die aufgeschmolzenen Polymeren intesiv so lange durchmischt, bis sich die Viskosität der Schemlze um mindestens 10 % erniedrigt hat, anschließend die Polymerschmelze unter weiterem Druchmischen abkühlt, bis die Viskosität der Schmelze wieder mindestens den ursprünglichen Wert erreicht hat und dann die Polymerschmelze entspannt. Die so hergestellten hochdispersen Mischungen können in üblicher Weise zu Formteilen verarbeitet werden.

EP 0 361 247 A2

## Verfahren zur Herstellung feindisperser Polymermischungen

Die Erfindung betrifft ein Verfahren zur Herstellung hochdisperser Mischungen von mindestens zwei unter üblichen Bedingungen in der Schmelze nicht vollständig mischbaren Polymeren sowie die Verwendung der hochdispersen Mischungen zur Herstellung von Formkörpern.

Es ist bekannt, Mischungen von Polymeren, die unter üblichen Bedingungen in der Schmelze nicht vollständig mischbar sind, in feindisperser Form dadurch herzustellen, daß man die Komponenten mit Hilfe geeigneter Mischaggregate, wie Knetern oder Extrudern, mit erheblichem Aufwand z.B. unter Anwendung besonders hoher Scherfelder mechanisch vermischt. Andere Verfahren beruhen darauf, die Polymeren der einen Komponente in den Monomeren der anderen Komponente zu lösen und anschließend zu polymerisieren. Schließlich ist bekannt, unverträgliche Polymere aus einer gemeinsamen Lösung zu gießen oder auch auszufällen (siehe beispielsweise B.J. Schmitt, Ber. Bunsenges. Phys. Chem 89, (1983), S. 1133ff oder Ottenbrite, Utracki, Inoue Eds.: Current Topics in Polymer Science, Vol. II. Rheology and Polymer Processing/Multiphase Systems, Hanser Publishers, München 1987).

Nachteilig bei den bekannten Verfahren zur Herstellung von feindispersen Polymermischungen ist jedoch, daß das mechanische Vermischen bei hohen Temperaturen stattfindet, was zu unerwünschten Nebenreaktionen führen bzw. die Polymere schädigen kann. Die Lösungsmittel-Verfahren erfordern aufwendige Reaktionsführung sowie die Entfernung organischer Lösungsmittel, die als Restlösungsmittel eine Reihe nachteiliger Effekte, wie verminderte Spannungs-Riß-Beständigkeit, im Blend verursachen.

Es wurde nun ein Verfahren zur Herstellung von hochdispersen Mischungen von mindestens zwei unter üblichen Bedingungen in der Schmelze nicht vollständig mischbaren Polymeren gefunden, das dadurch gekennzeichnet ist, daß man die eingesetzten Polymeren in Gegenwart von überkritischen Gasen oder Gasgemischen aufschmilzt, die aufgeschmolzenen Polymeren intensiv so lange durchmischt, bis sich die Viskosität der Schmelze um mindestens 10 % erniedrigt hat, anschließend die Polymerschmelze unter weiterem Durchmischen abkühlt, bis die Viskosität der Schmelze wieder mindestens den ursprünglichen Wert erreicht hat und dann die Polymerschmelze entspannt.

Als Polymere, die unter üblichen Bedingungen in der Schmelze nicht vollständig mischbar sind, kommen generell Kunststoffe und Elastomere in Frage. Die Polymeren können amorph oder teilkristallin sein. Die Polymeren können linear, verzweigt oder vernetzt sein. Ihre Taktizität darf beliebig iso-, syndio- oder ataktisch sein. Sie können aus mehreren Komponenten bestehen und daher zum Beispiel Blockcopolymere, statistische Polymere oder Pfropfpolymere sein. Auch die Molekulargewichte können in einem sehr breiten Bereich variieren. Daher können sowohl Oligomere wie auch hochmolekulare und ultrahochmolekulare Materialien eingesetzt werden.

In Frage kommen daher beispielsweise Polymere aus der Klasse der Polycarbonate, Polyolefine, Polystyrole, Polyhalo-olefine, Polyvinyle, Polyether, Polyacrylate, Polyalkylmethacrylate, Polydiene, Polyepoxide, Polyester, Polyestercarbonate, Polyamide, Polyarylene, wie Polyarylensulfide, Polyarylenketone, Polyarylensulfone, Polyketone, Polysulfone, Polyimide, Polyetherester, Polybutadiene, Naturkautschuk, Polyurethane, thermotrope und lyotrope flüssig-kristalline Polymere, Polychloroprene und Polysiloxane (siehe beispielsweise D.W. van Krevelen, Properties of Polymers, Correlations with chemical Structure, Elsevier Publishing Company, Amsterdam 1972, beispielsweise Appendix 2, S. 386ff). Geeignet sind auch (gegebenenfalls durch Dotierung) leitfähige Polymere und Polyelectrolyte.

Bevorzugt werden von diesen genannten Polymeren Polyestercarbonte auf Basis von Diphenolen, Tere- und/oder Isophthalsäure, Kohlensäure, Kettenabbrechern und gegebenenfalls Verzweigern, worin das Verhältnis von Carbonatstrukturen zu aromatischen Dicarbonsäure-Esterstrukturen zwischen 10 Mol-% zu 90 Mol-% und 40 Mol-% zu 60 Mol-%, bezogen jeweils auf die Molsumme aus Carbonat-und Dicarbonsäureesterstrukturen, liegt. Diese Polyestercarbonate sind z.B. in EP-OS 00 36 080 beschrieben.

Bevorzugt werden weiterhin aliphatische thermoplastische Polyester, besonderes bevorzugt Polyalkylenterephthalate. Solche sind beispielsweise Polyalkylenterephthalate auf Basis von Ethylenglykol, Propandiol-1,3, Butandiol-1,4, Hexandiol-1,6 und 1,4-Bis-hydroxymethylcyclohexan (siehe beispielsweise US-PS 2 647 885, 2 643 989, 2 534 028, 2 578 660, 2 742 494, 2 901 466).

Bevorzugt geeignet sind weiterhin flüssigkristalline aromatische Polyester auf Basis von gegebenenfalls substituierter p-Hydroxybenzoesäure, gegebenenfalls substituierter Iso- und/oder Terephthalsäure, gegebenenfalls 2,7-Dihydroxynaphthalin, gegebenenfalls 3-Chlor-4-hydroxybenzoesäure, gegebenenfalls Dihydroxydiphenylsulfide und anderen Diphenolen (EP-OS 0 131 846, EP-OS 0 132 637 und EP-OS 0 134 959).

Bevorzugt werden weiterhin Thermoplaste aus thermoplastischen Poly-alkyl-(meth)acrylaten, besonders geeignet sind Poly-$C_1$-$C_4$-alkyl-methacrylate, d.h. beispielsweise Polymere des Methyl-, Ethyl-, Propyl- oder Butylmethacrylsäureesters. Es sind sowohl Homopolymerisate als auch Copolymerisate dieser Methacrylsäureester darunter zu verstehen.

Bevorzugt werden weiterhin lineare und verzweigte Polyarylensulfide mit Struktureinheiten der allgemeinen Formel (I)

$(-Ar-S-)_n$     (I),

in welcher

-Ar- für einen bis zu 4-fach, bevorzugt höchstens 2-fach, substituierten Aromaten steht und

n eine ganze Zahl von 10 bis 1000 bedeutet.

Besonderes geeignet sind unsubstituierte para-Phenylensulfide (siehe z.B. US-PS 33 54 129 und EP-OS 0 171 021 sowie die in der EP-OS 0 171 021 herangezogene Literatur).

Weiterhin werden Polyarylensulfone, wie sie beispielsweise in der US-PS 3 264 536 beschrieben werden, bevorzugt.

Bevorzugt werden außerdem thermoplastische Polyphenylenoxide, besonders bevorzugt Poly(2,4-dialkyl-1,4-pheny lenoxide), wie sie beispielsweise in DE-OS 2 126 434 oder US-PS 3 306 875 beschrieben sind.

Bevorzugt werden außerdem aromatische Polyetherketone wie sie beispielsweise in US-PS 4 113 699, EP 135 938 sowie DOS 2 340 396 beschrieben sind.

Bevorzugt werden außerdem Vinyl-Co- und/oder Pfropf-Polymerisate. Als solche sind harzartige Polymerisate bzw. Copolymerisate aus Styrolen, α-Methyl-styrolen, Acrylnitril, Methacrylnitril, Estern der (Meth)Acrylsäure, Vinyl-$C_1$-$C_4$-carbonsäuren bzw. Mischungen aus diesen Monomeren mit Grenzviskositäten zwischen 0,3 und 1,5 dl/g (gemessen in Toluol bei 23 °C) zu verstehen. Ganz besonders bevorzugt sind Copolymere aus Styrol oder α-Methyl-styrol mit Acrylnitril, die gegebenenfalls bis zu 40 Gew.-% Ester der (Meth)acrylsäure, insbesondere Methylmethacrylat oder n-Butylacrylat, enthalten. Diese Vinylpolymerisate werden nach üblichen Verfahren wie radikalische Polymerisation in Masse, Lösung, Suspension oder Emulsion, ganz besonders bevorzugt aber durch radikalische Emulsionspolymerisation in Wasser erhalten. Weiterhin werden daraus hergestellte Pfropfpolymerisate von Monomeren, gepfropft auf Kautschuke mit Glastemperaturen unter 0 °C, bevorzugt (siehe z.B. B.J. Schmitt, Ber. Bunsenges. Phys. Chem. 89, S. 1143, linke Spalte, (1985)).

Bevorzugt zu verwendet sind weiterhin Polyamide, insbesondere Polyamid-6, Polyamid-6,6 und teilkristalline Copolyamide auf Basis dieser beiden Komponenten. Bevorzugt werden weiterhin amorphe Polyamide, die man durch Polykondensation von Diaminen mit Dicarbonsäuren erhält.

Bevorzugte weitere Polymere für das erfindungsgemäße Verfahren sind aromatische Polycarbonate auf Basis der Diphenole der allgemeinen Formel (II)

HO-Ar-X-Ar-OH     (II),

in welcher

Ar für einen gegebenenfalls substituierten Aromaten,

X für einen Alkylen- oder Alkylidenrest mit 1 bis 30, bevorzugt 1 bis 20 C-Atomen steht oder -S-, -$SO_2$-, -CO-, -O-, bevorzugt -S-, -CO- oder -O- ist.

Solche Polycarbonate sind literaturbekannt oder können nach literaturbekannten Verfahren hergestellt werden (siehe beispielsweise H. Schnell, Chemistry and Physics of Polycarbonates, Interscience Publ., New York 1964).

Besonders bevorzugt sind Polycarbonate, die zu wenigstens 5 Mol-%, bezogen auf die Gesamtsumme der eingesetzten Diphenole, Diphenole der folgenden Reihe enthalten:

-4,4'-Dihydroxyphenyl,

-2,2-Bis-(4-hydroxyphenyl)-propan,

-1,1-Bis-(4-hydroxyphenyl)-cyclohexan,

-2,2-Bis-(3,5-dimethyl-4-hydroxyphenyl)-propan.

Weiterhin werden Siloxan-Copolycarbonate auf Basis der oben beschriebenen Polycarbonate und Polyetherimide bevorzugt.

Ganz besonders bevorzugt können in das erfindungsgemäße Verfahren eingesetzt werden: Polycarbonat auf Basis 2,2-Bis-(4-hydroxyphenyl)-propan, Polystyrol, Polyvinylchlorid, Polyethylenterephthalat, Polybuthylenterephthalat, Poly-para-phenylensulfid, Polyamid-6, Polyamid-6.6 sowie Polymethylmethacrylat.

Nach dem erfindungsgemäßen Verfahren werden mindestens zwei unter üblichen Bedingungen in der Schmelze nicht vollständig mischbare Polymere miteinander gemischt. Es ist auch möglich, drei und mehr Polymere miteinander zu einer hochdispersen Mischung abzumischen. Welche und wieviele Polymere miteinander gemischt werden, hängt wesentlich von dem späteren Einsatzgebiet der erfindungsgemäßen Mischungen ab.

Die Polymere können miteinander im beliebigen Gewichtsverhältnis gemischt werden. Bei einer Zweikomponentenmischung können die beiden Komponenten in einem Gewichtsverhältnis von 99:1 bis 1:99 abgemischt werden. Bevorzugt werden die beiden Komponenten in einem Verhältnis von 20:80 bis 80:20, ganz besonders bevorzugt 25:75 bis 75:25, untereinander abgemischt. Das bevorzugte Mischungsverhältnis der Polymeren untereinander richtet sich im wesentlichen nach dem späteren Einsatzgebiet der erfindungsgemäßen Mischungen und kann dementsprechend leicht bestimmt und eingestellt werden.

Selbstverständlich ist es auch möglich, den zu mischenden Polymeren übliche anorganische und organische Zusatzstoffe, wie Fasern aus Glas, Kohlenstoff und/oder Polymeren, darüber hinaus Ruß, Titandioxid, Bariumsulfat, vernetzte Elastomere, Stabilisatoren und/oder Dotierungsmittel, wie AsF$_5$, Chlor, Jod, Brom, Kalium, Natrium sowie Rutheniumtetrachlorid, zuzusetzen. Die Art und Menge der Zusatzstoffe richtet sich nach dem jeweils gewünschten Einsatzzweck der erfindungsgemäßen Mischungen und kann leicht anhand von entsprechenden Vorversuchen festgelegt werden. Üblicherweise werden die Zusatzstoffe in einer Menge von ca. 0,1 bis 90 Gew.-%, bevorzugt 1 bis 50 Gew.-%, bezogen auf das Gesamtgewicht, den Polymeren zugegeben.

Wie erwähnt, sollen die erfindungsgemäß einzusetzenden Polymeren nicht vollständig unter üblichen Bedingungen miteinander mischbar sein. Als übliche Bedingungen werden vor allem Bedingungen verstanden unter denen die Polymere in der Schmelze vorliegen und dort gemischt werden, d.h. bei Temeraturen von ca 100 bis 430°C.

Nach dem erfindungsgemäßen Verfahren werden die eingesetzten Polymere zunächst in Gegenwart von überkritischen Gasen oder Gasgemischen aufgeschmolzen. Als überkritische Gase können nach dem erfindungsgemäßen Verfahren Gase eingesetzt werden, deren kritische Punkte in einem verfahrenstechnisch zugänglichen Bereich liegen, d.h. kritische Temperaturen unterhalb 400°C, bevorzugt zwischen -50°C und 350°C, ganz besonders bevorzugt zwischen 10°C und 250°C und kritische Drücke unterhalb 500 bar, bevorzugt zwischen 0,5 und 400 bar, besonders bevorzugt zwischen 1 und 300 bar besitzen. Als solche Gase kommen daher insbesondere Kohlendioxid, Distickstoffoxid, Methan, Stickstoff, Propan, Difluorchlormethan, Trifluormethan, Ethan und/oder Schwefeldioxid in Frage. Bevorzugt werden eingesetzt: Kohlendioxid, Schwefeldioxid, Propoan, Ethan und/oder Trifluormethan, besonders bevorzugt Kohlendioxid und/oder Schwefeldioxid.

Die überkritischen Gasbedingungen, unter denen beim erfindungsgemäßen Verfahren gearbeitet wird, sind beispielsweise erläutert in David C. Bonner, Polym. Eng. Sci 17 (1977), S. 65-72 oder in S.K. Kumar et al., Macromolecular 20 (1987), S. 2550ff.

Die Menge an einzusetzenden überkritischen Gasen oder Gasgemischen richtet sich im wesentlichen nach der für jedes Gas unterschiedlichen Löslichkeit in der betrachteten Polymermischung und beträgt üblicherweise ca. 0,05 bis 20, bevorzugt 0,1 bis 12 Gew.-%, bezogen auf das Gesamtgewicht der Mischung.

Die aufgeschmolzenen Polymeren werden insbesondere unter Rühren intensiv so lange durchgemischt, bis sich die Viskosität der Polymerschmelze um mindestens 10 %, bevorzugt 20 %, besonders bevorzugt 50 %, gegenüber der anfänglichen Schmelzviskosität erniedrigt hat.

Danach wird die Polymerschmelze unter weiterem intensiven Durchmischen abgekühlt, bis die Viskosität der Polymerschmelze wieder mindestens den ursprünglichen Wert, d.h. die anfängliche Schmelzviskosität, erreicht hat.

Die Zeit des Abkühlvorgangs richtet sich dabei je nach eingesetztem Polymer nach der zur Sättigung der Mischung mit dem angewendeten überkritischen Gas benötigten Zeitspanne, wobei die Abkühlzeit, während der gemischt wird, zwischen 1 bis 100 % dieser Zeitspanne, bevorzugt 5 bis 100 %, betragen kann. Dies entspreicht üblicherweise Zeiten zwischen 0,5 sec und 300 min, bevorzugt zwischen 10 sec und 280 min.

Selbstverständlich ist es nach dem erfindungsgemäßen Verfahren auch möglich so lange unter Durchmischen die Polymerschmelze abzukühlen, bis die Viskosität der Schmelze den ursprünglichem Wert überschritten hat. Beispielsweise kann die ursprüngliche Viskosität dabei um etwa 100 bis 200 % überschritten werden.

Nachdem die Polymerschmelze den Wert der ursprünglichen Viskosität mindestens wieder erreicht hat, wird die Schmelze in geeigneter Weise entspannt. Erhalten wird eine hochdisperse Mischung von unter üblichen Bedingungen nicht vollständig mischbaren Polymeren. Als "hochdispers" wird erfindungsgemäß eine Mischung angesehen, die in DSC- oder TMA-Messungen entweder stark verbreiterte, gegbenenfalls zusätzlich temperaturmäßig angenäherte, Glasübergänge oder nur eineneinzigen Glasübergang zeigt, wenn bei konventionell durchgeführter Schmelzmischung vergleichsweise enge und getrennte Glasübergangsstufen zu sehen sind.

Das erfindungsgemäße Verfahren zur Herstellung von hochdispersen Mischung kann beispielsweise in folgender Weise in allgemeiner Form (demonstriert anhand einer Mischung von 2 Thermoplasten) durchgeführt werden:

Zunächst werden die beiden Thermoplasten beispielsweise in Form von Granulat über ihre beiden Erweichungstemperaturen erwärmt. Anschließend, gegebenenfalls aber auch schon während der Erwärmung, wird das überkritische Gas oder Gasgemisch eingeleitet, dabei Temperatur und Druck so abgestimmt, daß das Gas oder Gasgemisch unter überkritischen Bedingungen vorliegt. Nach der Erwärmung kann mit dem mechanischen Mischen - beispielsweise durch Scherung, Rühren, Kneten - begonnen werden. Sobald die Viskosität sich um ca. 10 % des Ursprungswertes erniedrigt hat, kann mit der Abkühlung der Schmelze begonnen werden. Die Abkühlzeiten, die bis zum Erreichen der verminderten Entemperatur benötigt werden, hängen ab von der Intensität der mechanischen Bearbeitung der Schmelze und von den eingesetzten Polymeren und Gasen. Die Schmelze wird nun unter ständigem Rühren soweit abgekühlt, bis die Viskosität mindestens wieder den ursprünglichen Wert erreicht hat. Anschließend wird die Schmelze entspannt. Die entspannte Schmelze kann dann in üblicher Weise z.B. weiter zu Formkörpern verarbeitet werden.

Die nach dem erfindungsgemäßen Verfahren hergestellten hochdisperse Mischungen können in üblicher Weise zu Formteilen, beispielsweise durch Spritzgußverfahren, verarbeitet werden. Eine Verarbeitung zu Folien, Fasern, Filmen und Filamenten ist ebenfalls möglich.

Beispiele

a) Verwendete Substanzen:

PMMA = Polymerthylmethacrylat der Firma Rohm & Haas, V 811 mit einer Glastemperatur von 106 °C, gemessen mit der DSC-Methode bei 20 K/min Aufheizgeschwindigkeit.
PC = Polycarbonat aus dem Bisphenol-A mit einer relativen Lösungsviskosität, gemessen in Methylenchlorid bei Raumtemperatur und einer Polymerkonzentration von 0,5 g/gl, von 1,28 mit einer Glastemperatur von 146 °C, gemessen mit der DSC-Methode bei 20 K/min Aufheizgeschwindigkeit.

b) Vergleichsbeispiele:

Diese Vergleichsbeispiele sollen verdeutlichen, daß man - ohne Anwesenheit überkritischer Gase und ohne das erfindungsgemäße Verfahren anzuwenden - nicht die feine Dispergierung ohne zusätzliche Nachteile erreichen kann:

1. Vergleichsbeispiel:

Eine Mischung aus 300 g PC und 700 g PMMA wird bei 263,5 °C ohne Anwesenheit von überkritischen Gasen 1 Stunde intensiv mechanisch vermischt. Dabei wurde ein Kessel mit Rührern, auf denen ein hohes Drehmoment gebracht werden kann, verwendet. Nach dieser Mischzeit wurde die Schmelze rasch abgekühlt und eine Probe entnommen. Die Probe zeigte leichte Vergilbung. In der DSC wurde eine ausgeprägte Zweiphasigkeit, gekennzeichnet durch zwei getrennte, relativ enge Glasübergänge bei 115 °C und 145 °C, verzeichnet.

2. Vergleichsbeispiel:

Wie in Vergleichsbeispiel 1 wurden 700 g PMMA und 300 g PC bei 263,5 °C im gleichen Gefäß aufgeschmolzen. Diesmal war während der Durchmischung im Gasraum des Mischgefäßes unter Atmosphärendruck Kohlendioxid vorhanden. Während des Mischvorgangs wurde versucht, die Mischtemperatur zu reduzieren. Bei 253 °C mußte der Mischvorgang trotz kräftigen Rührens wegen der hohen Viskosität abgebrochen werden. Die Schmelze wurde rasch abgekühlt und eine Probe entnommen, die wie in Vergleichsbeispiel 1 zwei getrennte, relativ enge Glasübergänge (gemessen mit der DSC-Methode mit 20 K/min Aufheizgeschindigkeit) - diesmal bei 114,5 °C und 144 °C - hatte.

c) Erfindungsgemäße Beispiele:

Diese Beispiele sollen belegen, daß mit dem erfindungsgemäßen Verfahren eine Feindispergierung erreicht werden kann.

1. Beispiel:

700 g PMMA und 300 g PC wurden in einen geschlossenen 3-Liter-Kessel gebracht, der mit Rührer ausgestattet ist. Anschließend wurde innerhalb von 3 Minuten $CO_2$ eingeleitet, bis ein Druck im Gasraum des Rührgefäßes, gemessen mit einem Druckmanometer, von 10 bar erreicht war. Anschließend wurde binnen 5 Minuten unter ständiger $CO_2$-Einleitung und gleichzeitiger Aufheizung des Kessel-Inneren ein $CO_2$-Druck von 270 bar und eine Temperatur von 264 °C eingesetellt. Nach Erreichen dieser Temperatur wurde der Mischvorgang eingeleitet und zu Beginn das Drehmoment des Rührers gemessen. Nach ca. 5 Minuten war - überprüft durch die Reduktion des Drehmomentes des Rührers - eine Viskositätserniedrigung von mehr als ca. 22 % der ursprünglichen Viskosität bei der Temperatur von 264 °C erreicht. Innerhalb von weiteren ca. 50 Minuten wurde der Kessel unter ständigem Rühren auf eine Temperatur von 200 °C gebracht, wobei die Viskosität inzwischen die ursprüngliche Viskosität wieder erreicht hatte (Drehmoment-Kontrolle).

Anschließend wurde der Versuch abgebrochen und eine Probe aus dem abgekühlten und überdruckfreien Kessel entnommen. Diese Probe war nicht vergilbt und zeigte in der DSC eine deutlich verbesserte Dispergierung, gekennzeichnet durch die im Vergleich zu Beispiels 1 um etwa 50 % verbreiterte Glasübergänge bei 116 °C und 142 °C.

2. Beispiel:

Wie in Beispiel 1 wurde in gleicher Temperatur- und Druckführung und in gleicher Zusammensetzung PMMA und PC gemischt. Nach Erreichen der Mischtemperatur von 200°C - beschrieben wie in Beispiel 1 - wurde innerhalb weiterer 60 Minuten unter ständigem Rühren kontinuierlich auf 124°C abgekühlt. Die Kontrolle des Drehmomentes des Rührers ergab zu diesem Zeitpunkt eine um etwa 30 % gegenüber der ursprünglichen Viskosität erhöhte Viskosität.

Anschließend wurde der Versuch abgebrochen und eine Probe - wie in Beispiel 1 - entnommen.

Die Probe war nicht vergilbt und zeigte in der DSC feinste Dispergierung, gekennzeichnet durch einen einzigen - gegenüber Vergleichsbeispiel 1 - um etwa 20 % verbreiterten - Glasübergang bei etwa 123°C.

## Ansprüche

1. Verfahren zur Herstellung von hochdispersen Mischungen von mindestens zwei unter üblichen Bedingungen in der Schmelze nicht vollständig mischbaren Polymeren, dadurch gekennzeichnet, daß man die eingesetzten Polymeren in Gegenwart von überkritischen Gasen oder Gasgemischen aufschmilzt, die aufgeschmolzenen Polymeren intensiv so lange durchmischt, bis sich die Viskosität der Schmelze um mindestens 10 % erniedrigt hat, anschließend die Polymerschmelze unter weiterm Durchmischen abkühlt, bis die Viskosität der Schemlze wieder mindestens den ursprünglichen Wert erreicht hat und dann die Polymerschmelze entspannt.

2. Verfahren nach Anspruch 1, dadurch gekennzeichnet, daß als überkritische Gase oder Gasgemische solche mit einer kritischen Temperatur von weniger als 400°C und einem kritischen Druck von weniger als 500 bar eingesetzt werden.

3. Verfahren nach Ansprüchen 1 und 2, dadurch gekennzeichnet, daß man als überkritische Gase Kohlendioxid, Schwefeldioxid, Propan, Ethan und/oder Trifluormethan einsetzt.

4. Verfahren nach Ansprüchen 1 bis 3, dadurch gekennzeichnet, daß man die aufgeschmolzenen Polymeren intensiv so lange durchmischt, bis sich die Viskosität der Schmelze um mindestens 20 % gegenüber der anfänglichen Schmelzviskosität erniedrigt hat.

5. Verwendung der nach Ansprüchen 1 bis 4 hergestellten Mischungen für die Herstellung von Formteilen.